# EUROPEAN PATENT APPLICATION

(11) **EP 2 735 410 A2**
(43) Date of publication of application: **28.05.2014**
(21) Application number: 13466029.9
(22) Date of filing: 15.11.2013
(51) Int. Cl.: B25J 18/00, B25J 9/16

(54) **Multi-purpose robotic arm with five degrees of freedom with semi-automatic and automatic effector**

(30) Priority: 27.11.2012 CZ 20120846
(71) Applicant: FITE a.s., 709 51 Ostrava-Marianske Hory (CZ); Moravsky Vyzkum, s.r.o., 70200 Ostrava-Moravska Ostrava (CZ)
(72) Inventor: Pavel, Bartos, 747 14 Ludgerovice (CZ); Pavel, Mruzek, 739 37 Horní Bludovice (CZ); Petra, Haladová, 739 37 Horní Bludovice (CZ)

(57) **Abstract**

The solution belongs to the area of end processing elements for multi-purpose mobile devices designed for the performance of robotic and automatous works and is designed so that it can be applied as widely as possible. This is possible primarily thanks to the fact that the end subset - the effector that allows grabbing subjects of different shapes and sizes - can be replaced using a robotic arm in an automated way. The device can be applied especially in the area of rescue operations, using the grabbing and fire-extinguishing functions of the effector.

The multi-purpose universal robotic arm with five degrees of freedom, with exchangeable effector consists as a basic motion element the multi-purpose robotic arm (5), and as a basic functional processing element the exchangeable processing effector (1), while the processing effector (1) is carried by a five-axis multi-purpose robotic arm (5) with five degrees of freedom through an automated or mechanized interface (6, or 52) the processing effector (1) includes a adjustable flow line (2) of fire extinguishing or other medium that is protected by a cover (3) set in front and includes also a section (4) of grab clamps, while the automated interface (6) consists of two disengageable parts, that is arm interface (7) and in the opposition the effector interface (9), while on the circumference of the interfaces (7, 9) there are couples of connecting leakless hydraulic bushings (16) and electric bushing (17), while the arm interface (7) is firmly connected with the carrier (18) of the automated interface (6) rotating around the axis controlled by the rotary engine (19).

## Description

### The Technology Area

The solution belongs to the area of end processing elements for multi-purpose mobile devices designed for the performance of robotic and automaton works.

### Current State of the Technology

Currently, in the area of service robotics there is not known any robotic device, e.g. remotely controlled multi-purpose service and concurrently emergency robot with a universal automatically or semi-automatically exchangeable effector, with its grab and concurrently firefighting and injecting ability, with remote control of its circumferential setting of the grab segments and with the continuous rotary motion of the whole effector. The existing service robotic arms are oriented to the humanoid area, technical, traffic, emergency and rescue service. Often, such robotic devices are single-purpose, their universality is limited and they lack a wider spectrum of universality.

### The Essence of the Invention

To some degree, the above disadvantages are removed by multi-purpose universal robotic arm with five degrees of freedom, with semiautomatic and automatic effector, including as a basic motion element the multi-purpose robotic arm and as a basic functional processing element the exchangeable processing effector, while the processing effector is carried by a five-axis multi-purpose robotic arm with five degrees of freedom through an automated interface based on that the processing effector includes a adjustable flow line of fire extinguishing or other medium that is protected by a cover set in front serving as a rest at the same time, and furthermore the processing effector includes convertible section of grab clamps,
while the automated interface, consisting of two disengageable parts, that is arm interface, including the inner contact cone for connection, and furthermore in the opposition there is effector interface, including the exterior contact cone, on which there is the first couple of convertible surfaces and the second couple of self-locking surfaces, while to the first couple of convertible surfaces there is the parallel couple of contact plates positioned in a contact way and to the second couple of the self-locking surfaces there is a couple of eccentric cylinders positioned that are part of arm interface, while in the axis of the automated interface there is a hollow for the flow of the fire extinguishing medium and further on the circumference of the arm interface and effector interface there are couples of connecting leakless hydraulic bushings and electric bushing, while the arm interface is firmly connected with the end part of the robotic arm, which is the carrier of the automated interface, while this carrier revolves around the fifth axis controlled by the fifth-axis rotary engine laid in one of the two chambers of the second part of the robotic arm through the connecting shaft and through angular guide and finally through the fifth-axis transmission, while this carrier is laid in a rotary way in the fifth-axis radiaxial bearing, while the second part of the robotic arm us rotary around the fourth axis represented by the fourth-axis radiaxial bearing laid in a case, and firmly connected to it there is cogged pulley that is, using a flexible element, further connected with a pinion connected with the drive consisting of the fourth-axis rotary engine and fourth-axis transmission, while in the same case where there are parts of the fourth axis, there is also laid the third axis of the robotic arm that is perpendicular to the fourth axis and is represented by the third-axis radiaxial bearing laid in the flange of the first part of the robotic arm, where there is also the third-axis transmission followed by angular guide transmission that is connected with the third-axis rotary engine laid the first part hollow, where this first part 33 of the robotic arm is, in the lower part, finished with a chamber firmly connected with the rotary part of the second-axis transmission 38 and the second-axis transmission flange is firmly connected with the swivel eye which is part of the swivel, while the second-axis rotary engine is firmly connected with the second-axis transmission flange, while the monolith part of the swivel is also the flange of the horizontal swivel, that is firmly connected with the cogged inner ring of the rotary bearing, while its exterior ring is laid in a frame, where, through pinions, this cogged inner ring of the rotary bearing is driven by a couple of the rotary drives connected with a frame through cams for adjusting freedom.

Also placing a camera on the case enabling to see the action of the processing effector is an advantageous connection.

Furthermore it is advantageous if the processing effector with the robotic arm is connected through a mechanized interface whose carrier interface includes guiding spikes and the connection with the opposite part firmly connected with the processing effector is realized using screws and their connection interconnects also the leakless hydraulic bushings and electric bushing. Furthermore, it is advantageous when the arm interface and carrier are integrated into a single unit as a carrier with an extension and furthermore the effector interface and effector flange are integrated into a single unit as a flange with an extension, while these two blocks together make the interconnecting automated interface.

The designed multi-purpose universal robotic arm with five degrees of freedom, with semiautomatic and automatic effector demonstrates relatively accurate positioning of the effector end point with the above mentioned degrees of freedom, while showing a high bearing capacity exceeding the possibilities of a man. Furthermore, this arm allows for passing of electro energies, hydraulics and fire extinguishing medium passing through channels in the individual arms, without using any by-passes in joints of the individual arms. The universality of the suggested robotic device lays not only in the possibility to grab and extinguish simultaneously but also in the possibility to replace the effector as a unit, using a suitably selected interface, while it is possible to alternatively select an automated interface in one's own alternatives for replacing the effector with own robotic arm. Furthermore, it is possible to use with advantage a semiautomatic mechanized interface and when the arm is connected with the effector there is the automatic interconnection of the energies and media passing through robotic arm, and the same thing happens when using an automated effector.

Another advantage of the suggested solution is the mobility with relatively high bearing capacity of the arm in comparison with similar devices used e.g. in assembly lines. The devices allow using different types of effectors which meets especially the above mentioned automated interface, using the advantage of self-replacement of any effector with a robotic arm.

Last but not least advantage is further extension of the universality using the suggested robotic device by extending the alternatives of the effectors used, e.g. for penetration through concrete walls with the subsequent introduction of a liquid medium behind this wall, for assembly works using the continuous rotary motion of the effector and for special purposes in the area of the nuclear power engineering.

### Overview of Figures on the Drawings

On the figure for the annotation there is a longitudinal section of multi-purpose universal robotic arm with five degrees of freedom and exchangeable effector through automated interface, in the lower part of the figure there is its longitudinal plan section.

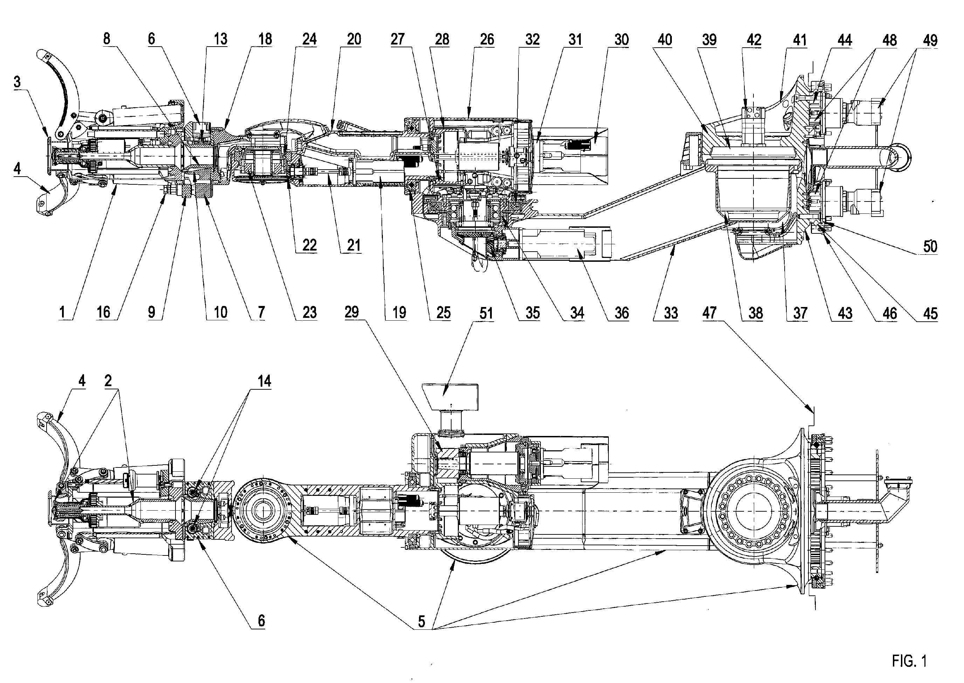

**Fig. 1** **-** there is a longitudinal section of multi-purpose universal robotic arm with five degrees of freedom and exchangeable effector through automated interface, in the lower part of the figure there is its longitudinal plan section.

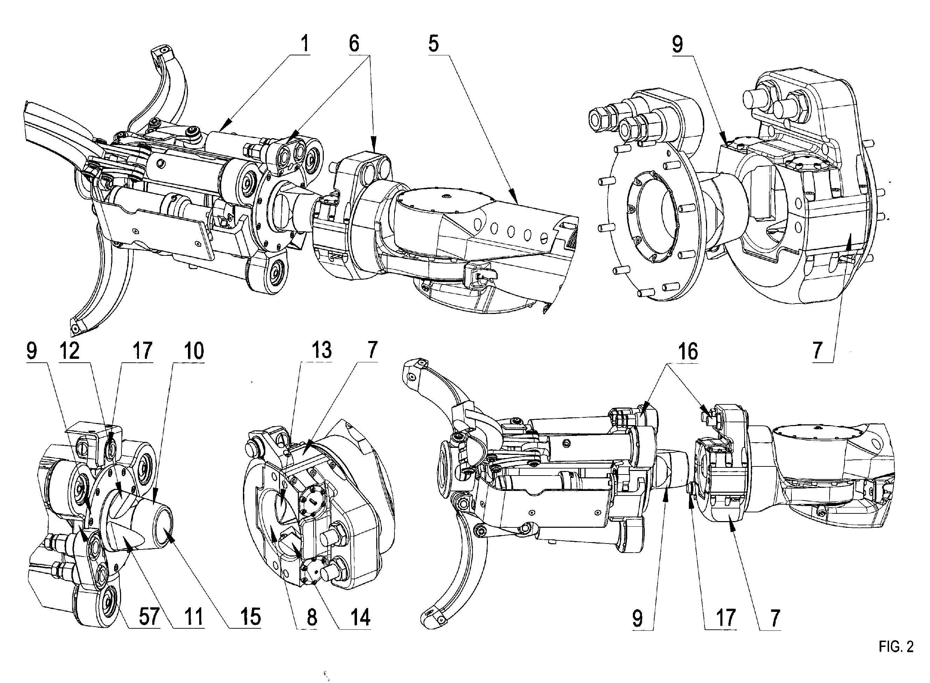

**Fig. 2** **-** the axonometric view of the exchangeable effector connected with the arm using an automated interface, in the right part of the figure there is the axonometric view of the automated interface, and in the lower part there are details of the interface in the disconnected position.

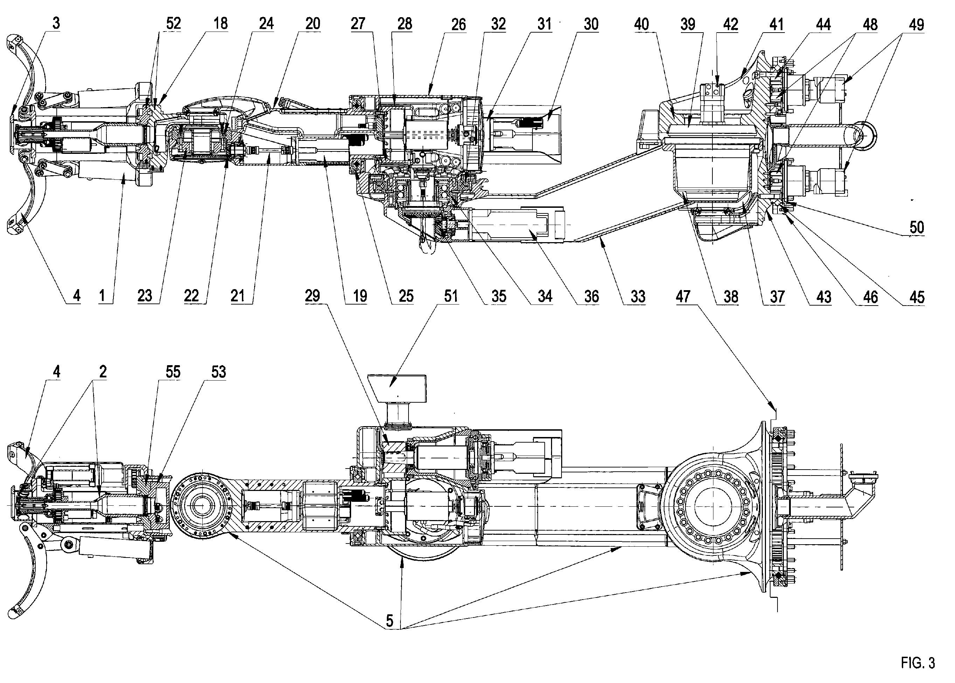

**Fig. 3** **-** there is a longitudinal section of multi-purpose universal robotic arm with five degrees of freedom and exchangeable effector through mechanical interface, in the lower part of the figure there is its longitudinal plan section.

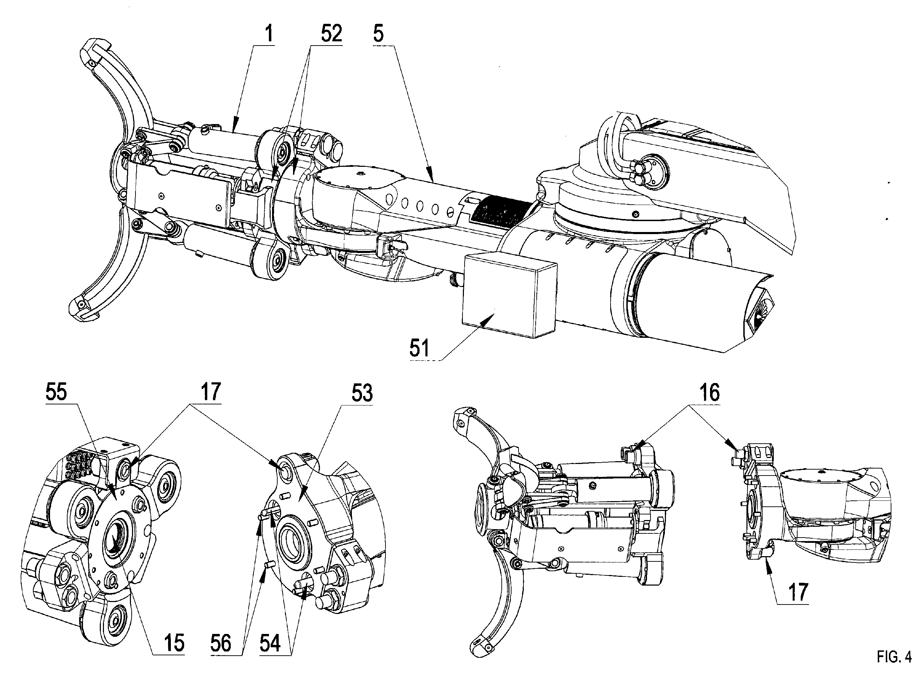

**Fig. 4** **-** the axonometric view of the exchangeable effector connected with the arm using a mechanical interface, and in the lower part there are details of the interface in the disconnected position.

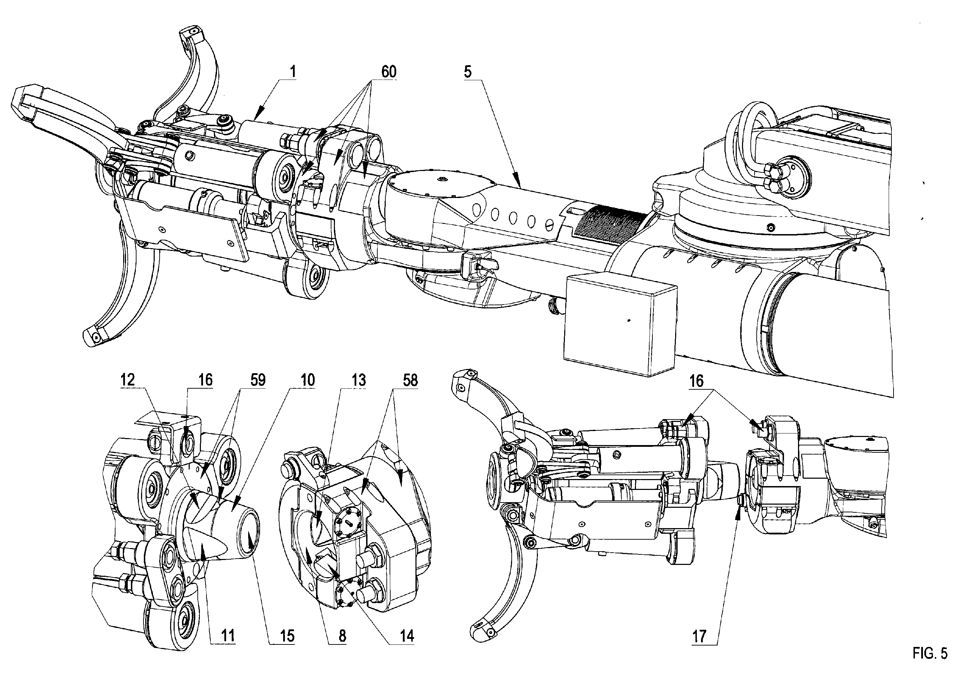

**Fig. 5** **-** the axonometric view of the automated interface with the arm, and in the lower part there are details of the interconnecting automated interface in the disconnected position.

### An example of the invention variant

In view of its relatively low weight the multi-purpose universal robotic arm with five degrees of freedom, with semiautomatic and automatic effector can be part of a mobile device. Furthermore, the effector can be used for moving subjects of a considerable weight and various shapes and in addition to that it surpasses the possibilities of a man in the accuracy of positioning, resistance to temperature, especially radiant heat.

The multi-purpose universal robotic arm with five degrees of freedom, with exchangeable effector, including as a basic motion element the multi-purpose robotic arm 5 and as a basic functional processing element the exchangeable processing effector *1*, while the processing effector 1 is carried by a five-axis multi-purpose robotic arm with 5 five degrees of freedom through an automated interface 6 where the processing effector 1 includes a adjustable flow line 2 of fire extinguishing or other medium that is protected by a cover 3 set in front serving as a rest at the same time, and furthermore the processing effector 1 includes convertible section 4 of grab clamps,
while the automated interface 6, consisting of two disengageable parts, that is arm interface 7, including the inner contact cone 8 for connection, and furthermore in the opposition there is effector interface 9, including the exterior contact cone 10, on which there is the first couple 11 of convertible surfaces and the second couple 12 of self-locking surfaces, while to the first couple 11 of convertible surfaces there is the parallel couple of contact plates 13 positioned in a contact way and to the second couple 12 of the self-locking surfaces there is a couple of eccentric cylinders 14 positioned that are part of arm interface 7, while in the axis of the automated interface 6 there is a hollow 15 for the flow of the fire extinguishing medium and further on the circumference of the arm interface 7 and effector interface 9 there are couples of connecting leakless hydraulic bushings 16 and electric bushing 17, while the arm interface 7 is firmly connected with the end part of the robotic arm 5, which is the carrier 18 of the automated interface 6, while this carrier 18 revolves around the fifth axis controlled by the fifth-axis rotary engine 19 laid in one of the two chambers of the second part 20 of the robotic arm 5 through the connecting shaft 21 and through angular guide 22 and finally through the fifth-axis transmission 23, while this carrier 18 is laid in a rotary way in the fifth-axis radiaxial bearing 24, while the second part 20 of the robotic arm 5 us rotary around the fourth axis represented by the fourth-axis radiaxial bearing 25 laid in a case 26, and firmly connected to it there is cogged pulley 27 that is, using a flexible element 28, further connected with a pinion 29 connected with the drive consisting of the fourth-axis rotary engine 30 and fourth-axis transmission 31, while in the same case 26 where there are parts of the fourth axis, there is also laid the third axis of the robotic arm 5 that is perpendicular to the fourth axis and is represented by the third-axis radiaxial bearing 32 laid in the flange of the first part 33 of the robotic arm 5, where there is also the third-axis transmission 34 followed by angular guide transmission 35 that is connected with the third-axis rotary engine 36 laid the first part 33 hollow, where this first part 33 of the robotic arm 5 is, in the lower part, finished with a chamber 37 firmly connected with the rotary part of the second-axis transmission 38 and the second-axis transmission 38 flange 39 is firmly connected with the swivel eye 40 which is part of the swivel 41, while the second-axis rotary engine 42 is firmly connected with the second-axis transmission 38 flange 39, while the monolith part of the swivel 41 is also the flange 43 of the horizontal swivel, that is firmly connected with the cogged inner ring 44 of the rotary bearing 45, while its exterior ring 46 is laid in a frame 47, where, through pinions 48, this cogged inner ring 44 of the rotary bearing 45 is driven by a couple of the rotary drives 49 connected with a frame 47 through cams 50 for adjusting freedom.

There is a camera 51 on the case 26 enabling to see the action of the processing effector 1.

The processing effector 1 with the robotic arm 5 can also be alternatively interconnected using a mechanized interface 52, consisting of driving part of the carrier interface 53 that includes guiding spikes 54, and the connection with the opposite part 55 firmly connected with the processing effector 1 is realized using screws 56, and their connection interconnects also the leakless hydraulic bushings 16 and electric bushing 17.

In special cases it is possible alternatively solve the main parts of the automated interface 6 so that the arm interface 7 and the carrier 18 are integrated into a single unit as a carrier 58 with an extension and furthermore the effector interface 9 and effector flange 57 are integrated into a single unit as a flange 59 with an extension, while these two elements 58, 59 together make the interconnecting automated interface 60.

### FUNCTIONS

The multi-purpose universal robotic arm with five degrees of freedom, with exchangeable effector, including as a basic motion element the multi-purpose robotic arm 5 and as a basic functional processing element the exchangeable processing effector *1* has two main functions.

**The fire extinguishing function** is provided by an adjustable flow line 2 with the option of setting both flow rate and the size of the spray cone. Before the flow line 2 there is set a cover 3 serving not only as a flow line protection but also as a rest when grabbing different subject by the section of grab clamps 4. **The grabbing function** is provided by the section of grab clamps 4 and it is convertible from central arrangement to a position when all the clamps are in the opposite standing, depending on the shape of the subject that needs to be grabbed.

The motion of the processing effector 1 in a space is provided by five-axis multi-purpose robotic arm 5 with five degrees of freedom allowing passage of needed media inside the device through different types of bushings.

The multi-purpose robotic arm 5 is connected with the processing effector 1 by the automated interface 6, while one of its subsets - the arm interface 7 is firmly connected with the end element of the multi-purpose robotic arm 5 - the carrier 18 and the second subset - effector interface 9 is firmly connected with the rear flange of the processing effector 1. The effector interface 9 includes exterior contact cone 10, that is upon connection inserted into the inner contact cone 8, while their mutual positioning is done by the first couple 11 of convertible surfaces on which the couple of 13 contact plates of the arm interface 7 sits and the interconnection is assured through the second couple 12 of the self-locking surfaces on which the couple of eccentric cylinders 14 of arm interface 7 sits. Inside the automated interface 6 there is a central hollow 15 allowing for passage of different media, in our case it is the fire extinguishing medium. On both subsets - the arm interface 7 and the effector interface 9 of the automated interface 6 - there are laid the counterparts of the leakless hydraulic bushings 16 and the counterparts of electric bushing 17 that provide the automatic interconnection of the mentioned media when having mechanical interconnection of the automated interface 6.

The needed motion of the effector 1 in a space is provided by five-axis multi-purpose robotic arm 5 with five degrees of freedom:
The fifth degree of freedom - swinging with the processing effector 1:
   In one of the two chambers of the second part 20 of the robotic arm 5 there is the fifth-axis rotary engine 19 laid that is connected - in order to enhance the position of the arm centre of gravity - with the angular guide 22 through the connecting shaft 21 and the drive output is the fifth-axis power transmission 23 laid in the end of the second part 20 of the robotic arm 5 and its rotary output is connected with the carrier 18, while the forces from the carrier 18 are caught in the fifth-axis radiaxial bearing 24 that is in the second part 20 end flange of the robotic arm 5.

The fourth degree of freedom - rotation of the second part 20 of the robotic arm 5 with the processing effector 1 in the cabinet 26:
At the end of the cabinet 26, parallelly with the second part 20 axis of the robotic arm 5 there is the fourth axis rotary engine 30 with the fourth axis transmission 31 and on their output there is a pinion 29 which - through a flexible element 28
   - is driving the cogged pulley 27, while the second part 20 of the robotic arm 5 is laid in rolling way in the fourth axis radiaxial bearing 25.

The third degree of freedom - rotation of the cabinet 26 with the second part 20 of the robotic arm 5 and automated interface 6:
At the end of the first part 33 of the robotic arm 5 there is a cavity with the third axis rotary engine 36 laid, followed by the angular guide transmission 35 which is followed by the third axis transmission 34 whose output is firmly connected with the case 26 so that all forces affecting the case 26 are projected to the third axis radiaxial bearing 32 laid in the first part flange 33 of the robotic arm 5.

The second degree of freedom - swinging the first part 33:
The swivel 41 has in the flange of the swivel eye 40 firmly inserted second-axis transmission flange 39 that is followed by the second-axis rotary engine 42 and
causes the motion of the second-axis transmission rotary part 38 which is inserted and firmly connected with the first-part chamber 37 of the first part 33 of the robotic arm 5 performing the swinging motion.

The first degree of freedom - rotating the swivel 41:
The basic supporting element of the multi-purpose universal robotic arm with five degrees of freedom and exchangeable effector is a swivel 41 whose horizontal swivel flange 43 is connected with the cogged inner ring 44 of the rotary bearing 45 whose exterior ring 46 is laid in a frame 47. The cogged inner ring 44 is engaged with the pinions 48 of a couple of rotary drives 49 and the cogging freedom can be adjusted using cams 50 inserted between each of the rotary drives 49 and a frame 47.

Alternatively, in less demanding cases it is possible to use less mechanized interface 52 consisting of a drifting part - carrier interface 53 using for guiding and positioning guiding spikes 54 and drifted part of the counterpart 55 including wholes for these guiding spikes 54. When tightening the connecting screws 56 the halves of the leakless hydraulic bushings 16 and electric bushings 17 are being interconnected.

In special cases it is possible alternatively solve the main parts of the automated interface 6 so that the arm interface 7 and the carrier 18 are integrated into a single unit as a carrier 58 with an extension and furthermore the effector interface 9 and effector flange 57 are integrated into a single unit as a flange 59 with an extension, while these two elements 58, 59 together make the interconnecting automated interface 60. This grouping is then characterized by a shorter construction length than the interconnecting chain of the automated interface 6 from two autonomous separatable parts.

### Industrial Use

The devise is designed so that it can be applied as widely as possible. This is possible primarily thanks to the fact that the end subset - the effector that allows grabbing subjects of different shapes and sizes - can be replaced using a robotic arm in an automated way. Putting the effector on is realized after partial positioning by engaging the eccentric cylinders using springs and on the contrary disconnection requires some energy.

In our case the device can be applied especially in the area of rescue operations, using the grabbing and fire-extinguishing functions of the effector.

Also the robotic arm demonstrates high bearing capacity and rigidity. It can lift loads of about 300 kg and manipulate with them in a controlled way in a space even with the option of remote control. It is designed so that its weight is as less as possible and that is why its applications are suitable even for mobile chassis in cases when it is possible to use the passage of the required medium to the effector through the central part of the robotic arm.

### A List of Used Positions:

1) Processing effector
2) Flow line
3) Cover
4) Section of grab clamps
5) Robotic arm
6) Automated interface
7) Arm interface
8) Inner contact cone
9) Effector interface
10) Exterior contact cone
11) The first couple of convertible surfaces
12) The second couple of self-locking surfaces
13) The couple of contact plates
14) The couple of eccentric cylinders
15) Hollow
16) The leakless hydraulic bushing
17) The electric bushing
18) Carrier
19) The fifth-axis rotary engine
20) The second part
21) The connecting shaft
22) The angular guide
23) The fifth-axis transmission
24) The fifth-axis radiaxial bearing
25) The fourth-axis radiaxial bearing
26) Case
27) The cogged pulley
28) The flexible element
29) The pinion
30) The fourth-axis rotary engine
31) The fourth-axis transmission
32) The third-axis radiaxial bearing
33) The first part
34) The third-axis transmission
35) Angular guide transmission
36) The third-axis rotary engine
37) Chamber
38) The second-axis transmission
39) The second-axis transmission flange
40) The swivel eye
41) The swivel
42) The second-axis rotary engine
43) The horizontal swivel flange
44) The cogged inner ring
45) The rotary bearing
46) The exterior ring
47) The frame
48) The pinion
49) Two rotational drives
50) The cam
51) The camera
52) The mechanized interface
53) The carrier interface
54) The guiding spike
55) The counterpart
56) The screw
57) The effector flange
58) The carrier with an extension
59) The flange with an extension
60) The interconnecting automated interface

## Claims

1. The multi-purpose universal robotic arm with five degrees of freedom, with automatic effector, including as a basic motion element the multi-purpose robotic arm (5) and as a basic functional processing element the exchangeable processing effector (1), while the processing effector (1) is carried by a five-axis multi-purpose robotic arm (5) with five degrees of freedom through an automated interface (6), **characteristic by the following:**
the processing effector (1) includes a adjustable flow line (2) of fire extinguishing or other medium that is protected by a cover (3) set in front serving as a rest at the same time, and also convertible section (4) of grab clamps,
while the automated interface (6), consisting of two disengageable parts, that is arm interface (7), including the inner contact cone (8) for connection, and
furthermore in the opposition there is effector interface (9), including the exterior contact cone (10), on which there is the first couple (11) of convertible surfaces and the second couple (12) of self-locking surfaces, while to the first couple (11) of convertible surfaces there is the parallel couple of contact plates (13) positioned in a contact way and to the second couple (12) of the self-locking surfaces there is a couple of eccentric cylinders (14) positioned that are part of arm interface (7),
while in the axis of the automated interface (6) there is a hollow (15) for the flow of the fire extinguishing medium and further on the circumference of the arm interface (7) and effector interface (9) there are connecting leakless hydraulic bushings (16) and electric bushing (17),
while the arm interface (7) is firmly connected with the end part of the robotic arm (5), which is the carrier (18) of the automated interface while the second part (20) of the robotic arm (5) is rotary around the fourth axis represented by the fourth-axis radiaxial bearing (25) laid in a case (26), and firmly connected to it there is cogged pulley (27), that is, using a flexible element (28), further connected with a pinion (29) connected with the drive while the third-axis transmission (34) is followed by angular guide transmission (35) that is connected with the third-axis rotary engine (36) laid the first part (33) hollow,
where this first part (33) of the robotic arm (5) is, in the lower part, finished with a chamber (37) firmly connected with the rotary part of the second-axis transmission (38) and the second-axis transmission (38) flange (39) is firmly connected with the swivel eye (40) which is part of the swivel (41), while the second-axis rotary engine (42) is firmly connected with the second-axis transmission (38) flange (39).

2. The multi-purpose universal robotic arm with five degrees of freedom, with semiautomatic effector, including as a basic motion element the multi-purpose robotic arm (5) and as a basic functional processing element the exchangeable processing effector (1), while the processing effector (1) is carried by a five-axis multi-purpose robotic arm (5) with five degrees of freedom through an mechanized interface (52), **characteristic by the following:**
the processing effector (1) includes a adjustable flow line (2) of fire extinguishing or other medium that is protected by a cover (3) set in front serving as a rest at the same time, and also convertible section (4) of grab clamps,
while the processing effector (1) with the robotic arm (5) si interconnected using a mechanized interface (52), consisting of driving part of the carrier interface (53) that includes guiding spikes (54), while the opposite part (55) is firmly connected with the processing effector (1) and their connection interconnects also the leakless hydraulic bushings (16) and electric bushing (17).
while the arm interface (7) is firmly connected with the end part of the robotic arm (5), which is the carrier (18) of the mechanized interface (52), while the second part (20) of the robotic arm (5) is rotary around the fourth axis represented by the fourth-axis radiaxial bearing (25) laid in a case (26), and
firmly connected to it there is cogged pulley (27), that is, using a flexible element (28), further connected with a pinion (29) connected with the drive while the third-axis transmission (34) is followed by angular guide transmission (35) that is connected with the third-axis rotary engine (36) laid the first part (33) hollow, where this first part (33) of the robotic arm (5) is, in the lower part, finished with a chamber (37) firmly connected with the rotary part of the second-axis transmission (38) and the second-axis transmission (38) flange (39) is firmly connected with the swivel eye (40) which is part of the swivel (41), while the second-axis rotary engine (42) is firmly connected with the second-axis transmission (38) flange (39).

3. The multi-purpose universal robotic arm according to the requirement 1, **characteristic by the following:**
the arm interface (7) and carrier (18) are integrated into a single unit as a carrier (58) with an extension and furthermore the effector interface (9) and
effector flange (57) are integrated into a single unit as a flange (59) with an extension, while these two blocks (58, 59) together make the interconnecting automated interface (60).

4. The multi-purpose universal robotic arm according to the requirement 1 or requirement 2, **characteristic by the following:**
there is a camera (51) on the case (26) enabling to see the action of the processing effector (1).

5. The multi-purpose universal robotic arm according to the requirement 1 or requirement 2, **characteristic by the following:**
the carrier (18) revolves around the fifth axis controlled by the fifth-axis rotary engine (19) laid in one of the two chambers of the second part (20) of the robotic arm (5) through the connecting shaft (21) and through angular guide (22) a and finally through the fifth-axis transmission (23), while this carrier (18) is laid in a rotary way in the fifth-axis radiaxial bearing (24).

6. The multi-purpose universal robotic arm according to the requirement 1 or requirement 2, **characteristic by the following:**
drive consists of the fourth-axis rotary engine (30) and fourth-axis transmission (31),

7. The multi-purpose universal robotic arm according to the requirement 1 or requirement 2, **characteristic by the following:**
while in the same case (26) where there are parts of the fourth axis, there is also laid the third axis of the robotic arm (5) that is perpendicular to the fourth axis and is represented by the third-axis radiaxial bearing (32) laid in the flange of the first part (33) of the robotic arm (5), where there is also the third-axis transmission (34)

8. The multi-purpose universal robotic arm according to the requirement 1 or requirement 2, **characteristic by the following:**
monolith part of the swivel (41) is also the flange (43) of the horizontal swivel,
that is firmly connected with the cogged inner ring (44) of the rotary bearing (45), while its exterior ring (46) is laid in a frame (47), where, through pinions (48), this cogged inner ring (44) of the rotary bearing (45) is driven by a couple of the rotary drives (49) connected with a frame (47) through cams (50) for adjusting freedom.
